# FASCICULE DE BREVET EUROPEEN

(11) **EP 3 878 636 B1**
(45) Date de publication et mention de la délivrance du brevet: **07.08.2024**
(21) Numéro de dépôt: 21158572.4
(22) Date de dépôt: 23.02.2021
(51) Int. Cl.: B29C 65/18, B31B 70/64, B65D 30/02, B65D 30/08, B65D 65/38, B29K 23/00, B29L 9/00

(54) **PROCÉDÉ DE FABRICATION D'UN SAC À SOUFFLETS, ET SAC À SOUFFLETS PERFECTIONNÉ**
VERFAHREN ZUR HERSTELLUNG EINES FALTENBEUTELS UND PERFEKTIONIERTER FALTENBEUTEL
METHOD FOR MANUFACTURING A GUSSET BAG, AND IMPROVED GUSSET BAG

(30) Priorité: 10.03.2020 FR 2002385
(43) Date de publication de la demande: 15.09.2021
(73) Titulaire: Coveris Flexibles France, 43290 Montfaucon en Velay (FR)
(72) Inventeur: VALETTE, Eric, 43120 Monistrol sur Loire (FR)
(74) Mandataire: Cabinet Laurent & Charras

(56) Documents cités:
- EP-B1- 3 261 838
- DE-U1- 202014 010 749
- US-A- 4 681 781
- WAGNER JOHN R ET AL: "MULTILAYER FLEXIBLE PACKAGING", 1 April 2016 (2016-04-01), pages 147 - 152, XP093023493, Retrieved from the Internet <URL:https://doi.org/10.1016/B978-0-323-37100-1.00011-9> [retrieved on 20230214]
- "Permeability Properties of Plastics and Elastomers - Fourth Edition", 14 October 2016, ISBN: 978-0-323-50859-9, article MCKEEN LAURENCE W.: "Permeability Properties of Plastics and Elastomers - Fourth Edition", pages: 53 - 53, XP093023508

## Description

### Domaine technique

L'invention se rattache au secteur technique des sacs d'emballage en matière plastique, tels que par exemple des sacs pour l'emballage de produits alimentaires.

Plus particulièrement l'invention trouve une application avantageuse dans le domaine des sacs en matière plastique flexible, notamment obtenus à partir d'une bande d'un film d'épaisseur inférieure à 250 µm, environ.

Ce type de sacs comprend au moins, et d'une manière parfaitement connue, une paroi avant et une paroi arrière dont les bords latéraux éventuellement reliés par des soufflets, un fond, et une ouverture de remplissage.

L'invention concerne plus particulièrement un procédé de fabrication d'un sac à soufflets de ce type, ainsi qu'un sac d'emballage à soufflets perfectionné.

### Art antérieur

Il est connu de l'art antérieur un procédé de fabrication d'une pluralité de sacs d'emballage comprenant au moins, une paroi avant et une paroi arrière, éventuellement reliées par des soufflets, un fond, et une ouverture de remplissage, les sacs sont fabriqués à partir d'un film plastique soumis à des opérations successives de pliage, de soudure et de coupe pour former en continu les sacs d'emballage.

Il est connu des d'utiliser un film plastique comprenant au moins deux couches, dont une couche interne destinée à être positionnée à l'intérieur du sac et une couche externe destinée à être positionnée à l'extérieur du sac.

Il est également connu que la couche interne est en polyéthylène, et la couche externe est réalisée avec du polyéthylène en fusion d'une densité supérieure à 0,93g/cm3 extrudé le long d'un sens de production et étiré à l'état figé dans ledit sens de production dans un rapport compris entre 3 :1 et 10 :1. Ce type de polyéthylène est connu sous le sigle MDOPE.

Les opérations de soudure sont ensuite réalisées par l'intermédiaire d'un dispositif de marquage à chaud appliqué sur la couche externe en faisant fondre la couche interne.

Cependant, lors desdites étapes de soudure, la couche externe a tendance à se déformer et à se dégrader.

Ceci est exacerbé par le fait que, pour pouvoir réaliser des soudures qui tiennent dans le temps, l'épaisseur de la couche interne est augmentée pour être par exemple supérieure à 50 µm ce qui implique d'augmenter davantage la température de soudure et notamment au-delà de la température de stabilité du de la couche externe en MDOPE.

Il en résulte que les soudures qui se trouvent dans le sens de production du film subissent un retrait créant des déformations sur le sac d'emballage, notamment des défauts de planéités, qui affecte l'efficience du packaging sur la ligne client.

Les documents DE202014010749U1 et US4681781 font partie de l'état de la technique critiqué. En particulier DE202014010749U1 décrit un procédé de fabrication de sacs d'emballage à partir d'un film plastique soumis à des opérations successives de pliage, de soudure et de coupe pour former en continu les sacs, le film comprenant au moins deux couches, dont une couche interne en polyéthylène et une couche externe réalisée avec du polyéthylène en fusion d'une densité supérieure à 0,93g/cm3 extrudé le long d'un sens de production et étiré à l'état figé dans le sens de production dans un rapport compris entre 3 :1 et 10 :1. Les opérations de soudure sont réalisées par l'intermédiaire d'un dispositif de marquage à chaud appliqué sur la couche externe en faisant fondre la couche interne. Dans D1 après avoir étiré le polyéthylène de la couche externe dans le sens de production, et avant les opérations de soudure, ledit polyéthylène est stabilisé thermiquement de sorte que les opérations de soudure soient réalisées sans ramollir ni dégrader la couche externe.

### Exposé de l'invention

L'un des buts de l'invention est donc de remédier aux problèmes précités en fournissant un procédé de fabrication d'une pluralité de sacs d'emballage qui permet d'obtenir des sacs dont l'esthétique est améliorée, en limitant, voire supprimant les défauts de planéité des zones soudées.

Pour résoudre les problèmes précités, il a été mis au point un procédé de fabrication selon la revendication 1.

Selon l'invention, après avoir étiré le polyéthylène de la couche externe dans le sens de production et à la fois dans le sens transversal et avant les opérations de soudure, ledit polyéthylène est stabilisé thermiquement de sorte que les opérations de soudure soient réalisées sans ramollir ni dégrader la couche externe.

De ce qui précède, le procédé de fabrication est simple, les lignes de soudure sont effectuées en agissant uniquement sur la couche externe du film, sans nuire à l'esthétique du sac.

La stabilisation thermique est obtenue en agissant sur la couche externe de manière à augmenter la température à partir de laquelle la rétraction du polyéthylène opère et notamment dans le but de rapprocher cette température de la température Vicat dudit polyéthylène étiré. Selon une forme de réalisation particulière, la stabilité thermique du polyéthylène est obtenue en réalisant une opération de recuit.

Cette dernière configuration, à savoir l'utilisation d'un polyéthylène étiré de façon biaxiale, permet d'améliorer la rigidité, la brillance et la transparence de la couche externe. Le fait d'étirer le polyéthylène implique qu'il faut davantage d'énergie pour ramollir la couche externe et la faire fondre. Un temps de fusion plus long et/ou une température plus élevée est donc nécessaire pour réaliser une fusion de ladite couche externe, ce qui lui permet de résister de façon optimale aux opérations de soudure, sans se dégrader.

La ou les lignes de soudure permettent de fermer le fond et/ou l'ouverture du sac, et/ou de rigidifier les bords des soufflets, et/ou de fixer les soufflets aux parois avant et arrière. Sur une forme de réalisation particulière du procédé, et pendant la formation du sac, les soufflets peuvent, d'une manière connue, être repliés longitudinalement sur eux-mêmes et insérés entre les parois avant et arrière du sac. Dans une autre configuration, les soufflets peuvent être rapportés. Des lignes de soudure permettant alors de fixer les soufflets aux parois avant et arrière sont alors réalisées le long des bords longitudinaux des soufflets, lesquels reposent l'un sur l'autre, par un dispositif de marquage à chaud agissant uniquement sur les parois avant et/ou arrière.

Dans cette configuration, et afin d'éviter davantage les risques de détérioration de la couche externe du sac lors de la réalisation des soudures des soufflets, le procédé selon l'invention prévoit qu'une bande de matériau à propriété d'isolation thermique, par exemple en polytétrafluoroéthylène, peut être disposée entre les bords longitudinaux des soufflets repliés pour que, pendant l'opération de soudure, lesdits bords longitudinaux reposent chacun sur, et notamment de part et d'autre, de la bande.

L'invention concerne aussi en sac d'emballage selon la revendication 7.

### Description des figures

D'autres avantages et caractéristiques de l'invention ressortiront mieux de la description qui va suivre, donnée à titre d'exemple non limitatif, à partir des figures annexées dans lesquelles :
[Fig. 1] est une représentation schématique illustrant en perspective un sac selon l'invention ;
[Fig. 2] est une représentation schématique illustrant un film multicouche dont la couche interne présente une densité inférieure à celle de la couche externe ;
[Fig. 3] est une représentation schématique illustrant le soudage des bords longitudinaux d'un soufflet ;
[Fig. 4] est une représentation schématique similaire à celle la figure 3, une bande de Polytétrafluoroéthylène étant positionnée entre les bords longitudinaux du soufflet repliés l'un sur l'autre.

### Description détaillée de l'invention

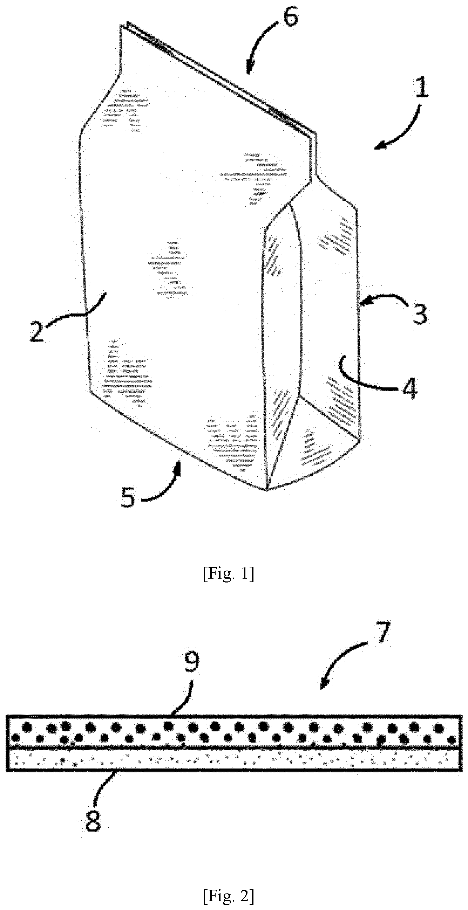

En référence à la figure 1, l'invention concerne un procédé de fabrication d'un sac (1) du type comprenant, et d'une manière connue, au moins, une paroi avant (2) et une paroi arrière (3), dont les bords latéraux sont éventuellement reliés par des soufflets (4), un fond (5), et une ouverture (6) de remplissage.

Le procédé permettant de conformer le sac (1) en tant que tel est connu de l'état de la technique, et peut être réalisé de plusieurs manières possibles. Il ne sera pas décrit plus en détail.

En référence à la figure 2, l'invention se concentre plus particulièrement sur le fait que le sac (1) est fabriqué à partir d'au moins un film (7) plastique présentant une couche interne (8) en polyéthylène destinée à être positionnée à l'intérieur du sac (1) et une couche externe (9) destinée à être positionnée à l'extérieur du sac (1).

Plus précisément, la couche externe (9) est réalisée avec du polyéthylène en fusion d'une densité supérieure à 0,93g/cm3, par exemple 0,95g/cm3, extrudé le long d'un sens de production et étiré à l'état figé dans le sens de production et à la fois dans un sens transversal dans un rapport compris entre 3 :1 et 10 : 1. et est stabilisé thermiquement de sorte que des opérations de soudure ultérieures soient réalisées sans ramollir ni dégrader la couche externe (9). De préférence, le polyéthylène de la couche externe est stable à 110°C, ce qui signifie qu'à 110°C la couche externe (9) subira un retrait inférieur à 5%, mesuré selon la norme NFT54-115. Le polyéthylène est étiré dans le sens de production et également dans un sens transversal pour améliorer la rigidité, la brillance et la transparence de la couche externe (9). Le polyéthylène de la couche externe (9) présentera par exemple, mais pas nécessairement, une densité supérieure à celle du matériau utilisé pour constituer la couche interne (8).

Ainsi, après avoir stabilisé thermiquement le polyéthylène de la couche externe (9), lorsqu'il est nécessaire de réaliser une ligne de soudure pendant l'opération de fabrication du sac (1), par exemple pour fermer le fond (5) et/ou l'ouverture (6) du sac (1), et/ou pour rigidifier les bords des soufflets (4), et/ou pour fixer les soufflets (4) aux parois avant (2) et arrière (3), ladite ligne de soudure est réalisée par l'intermédiaire d'un dispositif (10) de marquage à chaud appliqué sur la couche externe (9) en faisant fondre la couche interne (8)

Ce faisant, la soudure est réalisée en faisant fondre uniquement la couche interne (8) du film (7), sans ramollir ni dégrader esthétiquement la couche externe (9).

Le dispositif (10) de marquage à chaud est, par exemple, utilisé avec un temps de contact sur la couche externe (9) du film (7) inférieur à 1 s, et par exemple compris entre 100 ms et 600 ms.

A titre d'exemple, la densité de la couche interne (8) est comprise entre 0.8 g/cm3 et 0.92 g/cm3, hors additif.

Dans une autre forme de réalisation, pour avoir des densités différentes, mais en permettant la recyclabilité du film (7), le film (7) peut être multicouche et mono matériau. Le matériau utilisé pour constituer la couche externe (9) est étiré bi-axialement, par exemple dans un rapport compris entre 3 :1 et 10 :1, en vue d'augmenter l'énergie nécessaire pour le ramollir ou le faire fondre par rapport au même matériaux, non étiré, utilisé pour constituer la couche interne (8).

La température de scellage de la couche interne (8) est inférieure à la température de stabilisation de la couche externe (9). En pratique, la température de ramollissement de la face externe (9) est comprise entre 120°C et 140°C, de préférence 130°C, et la température de fusion de la face interne (8) est comprise entre 80°C et 100°C, de préférence 90°C. Dans le cas par exemple d'une température de ramollissement de la face externe (9) de 130°C, et d'une température de fusion de la face interne (8) de préférence 90°C, la température de soudage peut être de 120°C.

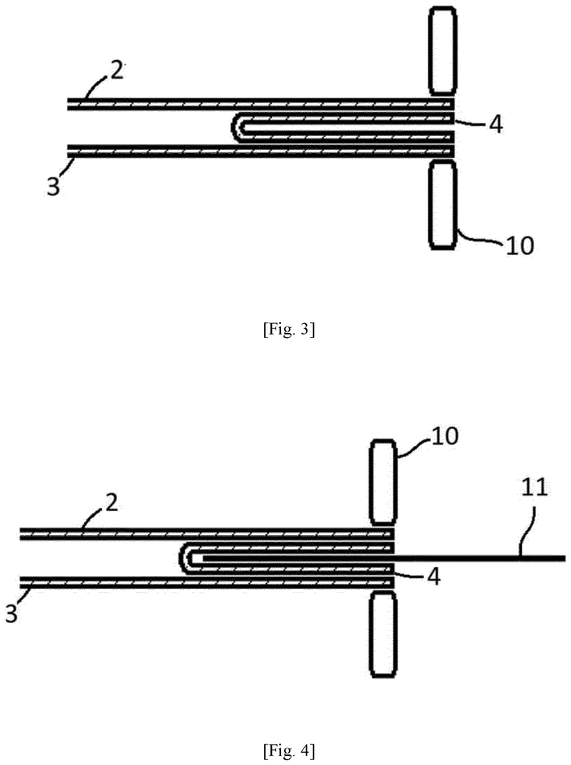

En référence aux figures 3 et 4, l'invention présente alors une application avantageuse lorsque les lignes de soudure permettent de fixer les soufflets (4) aux parois avant (2) et arrière (3).

En effet, dans cette configuration, et pendant la formation du sac (1), les soufflets (4) sont repliés longitudinalement sur eux-mêmes et sont insérées entre les parois avant (2) et arrière (3), les lignes soudure pour fixer les soufflets (4) aux parois avant (2) et arrière (3) sont alors réalisées le long des bords longitudinaux des soufflets (4), lesquels bords reposent l'un sur l'autre, par un dispositif (10) de marquage à chaud agissant uniquement sur les parois avant (2) et/ou arrière (3), voir figure 3.

La soudure fait alors fondre la couche interne (8) du film (7) pour fixer les soufflets (4) et ne dégrade pas la couche externe (9). Il en est de même pour tout autre type de soudure, par exemple celles permettant de rigidifier les bords longitudinaux des soufflets (4).

En référence à la figure 4, et afin de garantir d'une manière optimale l'intégrité de la couche externe (9) du film (7), l'invention prévoit, lorsqu'il s'agit de fixer ou rigidifier les soufflets (4), de pouvoir disposer éventuellement entre les bords longitudinaux des soufflets (4) repliés, une bande (11) de matériau, par exemple une bande (11) de polytétrafluoroéthylène, pour que, pendant l'opération de soudure, les bords longitudinaux reposent chacun sur, et notamment de part et d'autre, de la bande (11), de manière à ce qu'ils ne soient pas en contact et ne soit pas soudés entre eux.

L'invention permet alors d'obtenir un sac (1) d'emballage comprenant au moins, une paroi avant (2) et une paroi arrière (3), dont les bords latéraux sont éventuellement reliés par des soufflets (4), un fond (5), et une ouverture (6) de remplissage, fabriqué à partir d'au moins un film (7) plastique présentant une couche interne (8) en polyéthylène positionnée à l'intérieur du sac (1) et une couche externe (9) positionnée à l'extérieur du sac (1), la couche externe est réalisée avec du polyéthylène en fusion d'une densité supérieure à 0,93g/cm3, par exemple 0,95g/cm3, extrudé le long d'un sens de production et étiré à l'état figé dans le sens de production et dans un sens transversal dans un rapport compris entre 3 :1 et 10 :1, et stabilisé thermiquement.

## Revendications

1. Procédé de fabrication d'une pluralité de sacs (1) d'emballage comprenant au moins, une paroi avant (2) et une paroi arrière (3), éventuellement reliées par des soufflets (4), un fond (5), et une ouverture (6) de remplissage, les sacs (1) sont fabriqués à partir d'au moins un film (7) plastique soumis à des opérations successives de pliage, de soudure et de coupe pour former en continu les sacs (1) d'emballage, le film (7) comprend au moins deux couches, dont une couche interne (8) en polyéthylène destinée à être positionnée à l'intérieur du sac (1) et une couche externe (9) destinée à être positionnée à l'extérieur du sac (1) et réalisée avec du polyéthylène en fusion d'une densité supérieure à 0,93g/cm3 extrudé le long d'un sens de production et étiré à l'état figé dans le sens de production et à la fois dans un sens transversal dans un rapport compris entre 3 :1 et 10 :1, les opérations de soudure sont réalisées par l'intermédiaire d'un dispositif (10) de marquage à chaud appliqué sur la couche externe (9) en faisant fondre la couche interne (8), et, après avoir étiré le polyéthylène de la couche externe (9) et avant les opérations de soudure, ledit polyéthylène est stabilisé thermiquement de sorte que les opérations de soudure soient réalisées sans ramollir ni dégrader la couche externe (9).

2. Procédé selon la revendication 1, **caractérisé en ce que** le polyéthylène de la couche externe (9) est stable à 110°C.

3. Procédé selon la revendication 1, **caractérisé en ce que** la stabilité thermique du polyéthylène est obtenue en réalisant une opération de recuit.

4. Procédé selon l'une des revendications précédentes, **caractérisé en ce que** la ou les lignes de soudure permettent de fermer le fond (5) et/ou l'ouverture (6) du sac (1), et/ou de rigidifier les bords des soufflets (4), et/ou de fixer les soufflets (4) aux parois avant (2) et arrière (3).

5. Procédé selon l'une des revendications précédentes, **caractérisé en ce que**, pendant la formation du sac (1), les soufflets (4) sont repliés longitudinalement sur eux même et sont insérés entre les parois avant (2) et arrière (3), des lignes de soudures permettant de fixer les soufflets (4) aux parois avant (2) et arrière (3) sont réalisées le long des bords longitudinaux des soufflets (4) reposant l'un sur l'autre, par un dispositif (10) de marquage à chaud agissant uniquement sur les parois avant (2) et/ou arrière (3).

6. Procédé selon la revendication 5, **caractérisé en ce qu'**une bande (11) de matériau à propriété d'isolation thermique est disposée entre les bords longitudinaux des soufflets (4) repliés pour que, pendant l'opération de soudure, lesdits bords longitudinaux reposent chacun sur la bande (11).

7. Sac (1) d'emballage comprenant au moins, une paroi avant (2) et une paroi arrière (3), éventuellement reliées par des soufflets (4), un fond (5), et une ouverture (6) de remplissage, le sac (1) est fabriqué à partir d'au moins un film (7) plastique présentant une couche interne (8) en polyéthylène positionnée à l'intérieur du sac (1) et une couche externe (9) positionnée à l'extérieur du sac (1), la couche externe étant réalisée avec du polyéthylène en fusion d'une densité supérieure à 0,93g/cm3 extrudé le long d'un sens de production et étiré à l'état figé dans le sens de production et à la fois dans un sens transversal dans un rapport compris entre 3 :1 et 10 :1, et stabilisé thermiquement.

## Patentansprüche

1. Verfahren zur Herstellung einer Vielzahl von Verpackungsbeuteln (1), die mindestens eine Vorderwand (2) und eine Rückwand (3) umfassen, gegebenenfalls verbunden durch Falten (4), einen Boden (5) und eine Füllöffnung (6). Die Beutel (1) werden aus mindestens einer Kunststofffolie (7) hergestellt, die aufeinanderfolgenden Falt-, Schweiß- und Schneidoperationen unterzogen wird, um die Verpackungsbeutel (1) kontinuierlich zu formen. Die Folie (7) umfasst mindestens zwei Schichten, darunter eine innere Schicht (8) aus Polyethylen, die innen im Beutel (1) positioniert ist, und eine äußere Schicht (9), die außen am Beutel (1) positioniert ist und aus Polyethylen mit einer Dichte von mehr als 0,93g/cm³ hergestellt ist, das in Produktionsrichtung extrudiert und im erstarrten Zustand sowohl in Produktionsrichtung als auch in Querrichtung im Verhältnis zwischen 3: 1 und 10:1 gestreckt wird. Die Schweißoperationen werden durch ein Heißprägegerät (10) durchgeführt, das auf die äußere Schicht (9) angewendet wird, um die innere Schicht (8) zu schmelzen, und nach dem Strecken des Polyethylens der äußeren Schicht (9) und vor den Schweißoperationen wird das Polyethylen thermisch stabilisiert, sodass die Schweißoperationen durchgeführt werden, ohne die äußere Schicht (9) zu erweichen oder zu beschädigen.

2. Verfahren nach Anspruch 1, **dadurch gekennzeichnet, dass** das Polyethylen der äußeren Schicht (9) bei 110°C stabil ist.

3. Verfahren nach Anspruch 1, **dadurch gekennzeichnet, dass** die thermische Stabilität des Polyethylens durch eine Glühoperation erreicht wird.

4. Verfahren nach einem der vorhergehenden Ansprüche, **dadurch gekennzeichnet, dass** die Schweißlinien den Boden (5) und/oder die Füllöffnung (6) des Beutels (1) verschließen und/oder die Ränder der Falten (4) versteifen und/oder die Falten (4) an den Vorder- (2) und Rückwänden (3) befestigen.

5. Verfahren nach einem der vorhergehenden Ansprüche, **dadurch gekennzeichnet, dass** während der Beutelbildung (1) die Falten (4) längs auf sich selbst gefaltet und zwischen die Vorder- (2) und Rückwände (3) eingesetzt werden. Schweißlinien, die die Falten (4) an den Vorder- (2) und Rückwänden (3) befestigen, werden entlang der Längskanten der aufeinander liegenden Falten (4) durch ein Heißprägegerät (10) ausgeführt, das nur auf die Vorder- (2) und/oder Rückwände (3) wirkt.

6. Verfahren nach Anspruch 5, **dadurch gekennzeichnet, dass** ein Streifen (11) aus einem Material mit thermischen Isoliereigenschaften zwischen den Längskanten der gefalteten Falten (4) angeordnet wird, sodass während der Schweißoperation diese Längskanten jeweils auf dem Streifen (11) ruhen.

7. Verpackungsbeutel (1), der mindestens eine Vorderwand (2) und eine Rückwand (3) umfasst, gegebenenfalls verbunden durch Falten (4), einen Boden (5) und eine Füllöffnung (6), der Beutel (1) wird aus mindestens einer Kunststofffolie (7) hergestellt, die eine innere Schicht (8) aus Polyethylen innen im Beutel (1) und eine äußere Schicht (9) außen am Beutel (1) aufweist. Die äußere Schicht besteht aus Polyethylen mit einer Dichte von mehr als 0,93g/cm³, das in Produktionsrichtung extrudiert und im erstarrten Zustand sowohl in Produktionsrichtung als auch in Querrichtung im Verhältnis zwischen 3:1 und 10:1 gestreckt und thermisch stabilisiert wird.

## Claims

1. Method for manufacturing a plurality of packaging bags (1) comprising at least a front wall (2) and a rear wall (3), optionally connected by gussets (4), a bottom (5), and a filling opening (6). The bags (1) are manufactured from at least one plastic film (7) subjected to successive folding, welding, and cutting operations to continuously form the packaging bags (1). The film (7) comprises at least two layers, including an inner layer (8) of polyethylene intended to be positioned inside the bag (1) and an outer layer (9) intended to be positioned outside the bag (1), made with polyethylene with a density greater than 0.93g/cm3, extruded along a production direction and stretched while solidified in the production direction and also in a transverse direction in a ratio between 3:1 and 10:1. The welding operations are performed using a hot stamping device (10) applied to the outer layer (9), melting the inner layer (8), and, after stretching the polyethylene of the outer layer (9) and before the welding operations, said polyethylene is thermally stabilized so that the welding operations are carried out without softening or degrading the outer layer (9).

2. Method according to claim 1, **characterized in that** the polyethylene of the outer layer (9) is stable at 110°C.

3. Method according to claim 1, **characterized in that** the thermal stability of the polyethylene is obtained by performing an annealing operation.

4. Method according to any of the preceding claims, **characterized in that** the welding lines close the bottom (5) and/or the filling opening (6) of the bag (1), and/or stiffen the edges of the gussets (4), and/or attach the gussets (4) to the front (2) and rear (3) walls.

5. Method according to any of the preceding claims, **characterized in that**, during the formation of the bag (1), the gussets (4) are folded longitudinally upon themselves and inserted between the front (2) and rear (3) walls. Welding lines securing the gussets (4) to the front (2) and rear (3) walls are made along the longitudinal edges of the gussets (4) resting on each other, by a hot stamping device (10) acting only on the front (2) and/or rear (3) walls.

6. Method according to claim 5, **characterized in that** a strip (11) of material with thermal insulation properties is placed between the longitudinal edges of the folded gussets (4) so that, during the welding operation, said longitudinal edges rest each on the strip (11).

7. Packaging bag (1) comprising at least a front wall (2) and a rear wall (3), optionally connected by gussets (4), a bottom (5), and a filling opening (6), the bag (1) is manufactured from at least one plastic film (7) having an inner layer (8) of polyethylene positioned inside the bag (1) and an outer layer (9) positioned outside the bag (1). The outer layer is made with polyethylene with a density greater than 0.93g/cm3, extruded along a production direction and stretched while solidified in the production direction and also in a transverse direction in a ratio between 3:1 and 10:1, and thermally stabilized.
